(19)

Europäisches
Patentamt
European
Patent Office
Office européen
des brevets

(11) **EP 1 840 824 A1**

(12) **EUROPEAN PATENT APPLICATION**

(43) Date of publication:
**03.10.2007 Bulletin 2007/40**

(51) Int Cl.:
*G06T 5/00* (2006.01)   *H04N 1/60* (2006.01)

(21) Application number: **07006409.2**

(22) Date of filing: **28.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **31.03.2006 JP 2006099214**

(71) Applicant: **Fujifilm Corporation
Minato-ku
Tokyo (JP)**

(72) Inventor: **Tsujita, Kazuhiro
Ashigarakami-gun
Kanagawa-ken (JP)**

(74) Representative: **Klunker . Schmitt-Nilson . Hirsch
Winzererstrasse 106
80797 München (DE)**

(54) **Generation of spectroscopic images from an endoscopic image**

(57)   A method for accurately generating estimated spectroscopic images from a color image stored in an image database (10) . A color image (P) for generating estimated spectroscopic images (SP1 to SP3) is selected from an image database (10). Here, unique information (F1) and imaged region information (F2) are obtained together with the color image (P). Then, a transformation coefficient (C) is obtained from a coefficient database (41) based on the unique information (F1) and the imaged region information (F2). The color image (P) is matrix-transformed using the selected transformation coefficient (C), and estimated spectroscopic images (SP1 to SP3) at predetermined spectroscopic wavelengths are generated.

FIG.1

EP 1 840 824 A1

**Description**

BACKGROUND OF THE INVENTION

Field of the Invention

The present invention relates to an image processing method and apparatus for generating a processed image using spectroscopic images of a measurement target obj ect obtained by an endoscope system at respective wavelengths, and a program therefor.

Description of the Related Art

In endoscope examinations, aspects and pathological changes in tissues are detected through changes in the morphorogy of the tissues including protrusions, depressions and surface patterns, or subtle changes in the color thereof. Recognition of these changes in the shapes and the like depends largely on the wavelengths of light from the affected sites. A method for performing the observation by specifying the wavelength with the use of an optical filter has conventionally been proposed. The method, however, obtains an image of only a single wavelength region, and requires filter replacement in order to perform the observation using another wavelength. Consequently, a new method has recently been developed as described, for example, in Japanese Unexamined Patent Publication No. 2003-094336. The method employs a spectroscopic image estimation technique to the endoscope examination application. The spectroscopic image estimation technique is a technique for performing image generation by estimating an image at any wavelength from an ordinary image based on arithmetic operations of a computer.

The electronic endoscope system described in Japanese Unexamined Patent Publication No. 2003-094336 obtains color image signals by a solid-state imaging device such as a CCD or the like, and obtains a plurality of estimated spectroscopic images at specific wavelengths by performing a matrix transformation on the color image signals using a predetermined matrix transformation coefficient. Note that the wavelength of a spectroscopic image signals may be changed by changing the value of the transformation coefficient. In addition, when displaying the plurality of estimated spectroscopic images on the display section, a processed image, which is an image represented by the respective spectroscopic image signals with RGB signals allocated thereto, is displayed.

In the mean time, when obtaining a color image through endoscope system, a method for displaying an optimized image by gain controlling in each of the RGB signals is proposed as described for example, in Japanese Unexamined Patent Publication No. 2003-102676. In the endoscope system described in the aforementioned patent publication, color signal gains in the color signal generation circuit are controlled to reduce the red level of images so that a reddish image is not obtained when enlarged imaging is performed in close proximity to the observation region. Further, an endoscope system having a function to control the gains according to the preference of the users is also proposed.

Here, there may be cases where an image obtained by an endoscope system and stored in a computer is reviewed, as well as observing the measurement target object using the image obtained by the endoscope system on the spot. In this case, estimated spectroscopic images are generated from a color image as in the system described in Japanese Unexamined Patent Publication No. 2003-094336. Here, there may be cases, however, where the stored color images themselves do not accurately represent the measurement target object due to the gain control performed on the images in order to improve visualization as in the system described in Japanese Unexamined Patent Publication No. 2003-102676. When estimated spectroscopic images are generated from such color images, there may be cases where the obtained estimated spectroscopic images are not of predetermined wavelengths, causing a problem that estimated spectroscopic images at desired spectroscopic wavelengths are not obtained.

SUMMARY OF THE INVENTION

In view of the circumstances described above, it is an object of the present invention to provide an image processing method and apparatus capable of accurately generating estimated spectroscopic images, and a program therefor.

The image processing method of the present invention is a method including the steps of:

obtaining a color image obtained by an endoscope system and gain controlled in each of the primary color signals, and unique information of the endoscope system that obtained the color image from an image database having stored therein the color image and the unique information associated with each other;
initializing the controlled gains of the color image based on the obtained unique information; and
generating estimated spectroscopic images from the gain initialized color image.

The image processing apparatus of the present invention is an apparatus including:

an image database having stored therein a color image obtained by an endoscope system and gain controlled in each of the primary color signals, and unique information of the endoscope system that obtained the color image associated with each other;
an image obtaining means for obtaining the color image and the unique information from the image database;
a gain initialization means for initializing the controlled gains of the color image based on the unique information obtained by the image obtaining means; and
an image generation means for generating estimated spectroscopic images from the gain initialized color image.

The image processing program of the present invention is a program for causing a computer to perform a process including the steps of:

obtaining a color image obtained by an endoscope system and gain controlled in each of the primary color signals, and unique information of the endoscope system that obtained the color image from an image database having stored therein the color image and the unique information associated with each other;
initializing the controlled gains of the color image based on the obtained unique information; and
generating estimated spectroscopic images from the gain initialized color image.

Here, the transformation coefficient may be of any type as long as it allows a plurality of spectroscopic images to be generated from a color image. For example, it may be in the form of a 3x3 or 3x4 transformation matrix.

The image generation means may include: a coefficient database having stored therein a transformation coefficient, which is used when the estimated spectroscopic images are generated from the color image, and the unique information associated with each other; a coefficient obtaining means for obtaining the transformation coefficient from the coefficient database using the unique information obtained by the image obtaining means; and a transformation performing means for transforming the color image such that estimated spectroscopic images at predetermined spectroscopic wavelengths are generated using the transformation coefficient obtained by the coefficient obtaining means.

The image database may be a database having stored therein imaged region information of the color image associated therewith together with the unique information. In this case, the image obtaining means may be a means for obtaining the unique information and the imaged region information together with the color image, and the image generation means may be a means for generating the estimated spectroscopic images based on the imaged region information.

Further, the coefficient database may be a database having stored therein the imaged region information associated with the transformation coefficient together with the unique information, and the coefficient obtaining means may be a means for obtaining the transformation coefficient from the coefficient database using the unique information and the imaged region information.

Still further, the image database may be a database having stored therein the imaged region information of a color image associated therewith together with the unique information, the image obtaining means may be a means for obtaining the unique information and the imaged region information together with the color image, and the image generation means may be a means for generating the estimated spectroscopic images based on the imaged region information.

The image processing apparatus of the present invention includes: an image database having stored therein a color image of a measurement target object obtained by an endoscope system and unique information of the endoscope system that obtained the color image associated with each other; an image obtaining means for obtaining the color image and the unique information from the image database; a gain initialization means for initializing the controlled gains of the color image based on the unique information obtained by the image obtaining means; and an image generation means for generating estimated spectroscopic images from the gain initialized color image. Accordingly, even when estimated spectroscopic images are generated using a color image obtained by an endoscope system and gain controlled before being stored in order to improve the visibility of the color image, the estimated spectroscopic images are generated after the color image is accurately restored to the originally recorded state by initializing the controlled gains, so that the generation accuracy of the estimated spectroscopic images may be improved.

If the image generation means includes: a coefficient database having stored therein a transformation coefficient, which is used when the estimated spectroscopic images are generated from the color image, and the unique information associated with each other; a coefficient obtaining means for obtaining the transformation coefficient from the coefficient database using the unique information obtained by the image obtaining means; and a transformation performing means for transforming the color image such that estimated spectroscopic images at predetermined spectroscopic wavelengths are generated using the transformation coefficient obtained by the coefficient obtaining means, estimated spectroscopic images at desired wavelengths may be generated from an image obtained by an endoscope system. In addition, for color images obtained by a plurality of different endoscope systems having different spectroscopic properties, good and high-fidelity estimated spectroscopic images may be generated by changing the transformation coefficients based on the unique information.

Further, if the image database is a database having stored therein the imaged region information of the color image associated therewith together with the unique information, and the image obtaining means is a means for obtaining the unique information and the imaged region information together with the color image, and the image generation means is a means for generating the estimated spectroscopic images based on the imaged region information, optimum estimated spectroscopic images may be generated automatically according to the imaged region.

Still further, if the coefficient database is a database having stored therein the imaged region information associated with the transformation coefficient together with the unique information, and the coefficient obtaining means is a means for obtaining the transformation coefficient from the coefficient database using the unique information and the imaged region information, optimum estimated spectroscopic images may be generated automatically according to the imaged region.

BRIEF DESCRIPTION OF THE DRAWINGS

Figure 1 is a block diagram of an exemplary embodiment of an image output apparatus of the present invention.

Figure 2 is a schematic diagram illustrating that a processed image is generated by allocating RBG signals to estimated spectroscopic images in the image output means shown in Figure 1.

Figure 3 is a flowchart of an exemplary embodiment of an image output method of the present invention.

DESCRIPTION OF THE PREFERRED EMBODIMENTS

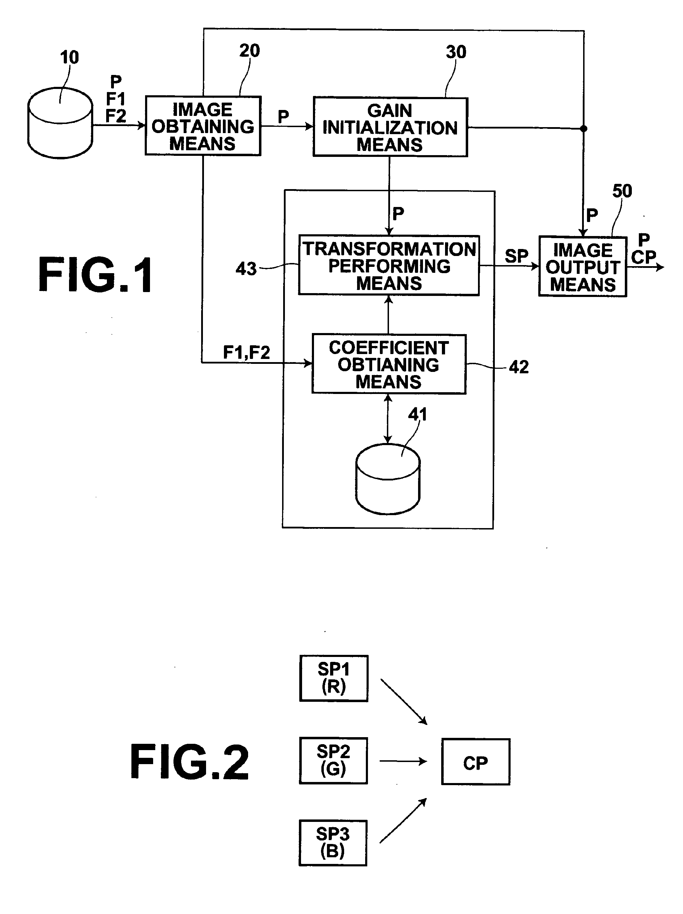

Hereinafter, an exemplary embodiment of the present invention will be described with reference to the accompanying drawings. An exemplary embodiment of the image processing apparatus of the present invention will now be described with reference to the accompanying drawings. The image processing apparatus 1 shown in Figure 1 is realized by executing an image processing program, which is stored in an auxiliary storage, on a computer (e.g., personal computer, or the like). The image processing program is recorded on an information recording medium, such as a CD-ROM or the like, or distributed through a network, such as the Internet or the like, and installed on the computer.

The image processing apparatus 1 is an apparatus for generating estimated spectroscopic images SP1 to SP3 from a color image P represented, for example, by RGB signals. The apparatus includes: an image database 10 having stored therein a color image P obtained by an endoscope system and unique information F1 of the endoscope system associated with each other; an image obtaining means 20 for obtaining the color image P and the unique information F1 from the image database 10; a gain initialization means 30 for initializing the controlled gains of the color image P based on the unique information F1 obtained by the image obtaining means 20; and an image generation means 40 for generating the estimated spectroscopic images SP 1 to SP 3 from the gain initialized color image P.

Here, a plurality of color images P stored in the image database 10 includes an image which is gain controlled in each of the primary color signals (each of the RGB signals: 8 to 16 bits) in order to improve visualization of the image at the time of imaging by the endoscope system. The image database 10 also includes, for example, a gain factor used for the gain control of the image when obtained (or user information associated with the gain factor), and the unique information F1 which includes the spectroscopic properties, illumination characteristics, and the like of the endoscope system. The spectroscopic properties include spectroscopic sensitivity of the CCD, and spectroscopic transmittance of the color filters of the endoscope system. The illumination characteristics include, for example, spectroscopic intensity and temporal information of the illumination source, spectroscopic transmittance of the diffuser of the illumination source, and the like. The image database 10 further includes imaged region information F2 that indicates the imaged region of the color image P. The imaged region information F2 includes, for example, information of spectral reflectivity of the imaged region and the imaged region itself, such as blood vessel, polyp, or the like. The color image P for generating the estimated spectroscopic images SP1 to SP3, and the unique information F1 of the color image P1 are obtained by the image obtaining means 20.

The gain initialization means 30 is a means for initializing the controlled gains of the color image P using the unique information F1 obtained by the image obtaining means 20. More specifically, the gain initialization means 30 multiplies the inverse values of the gain factors obtained as the unique information F1 to the color image P to restore the color image P to the original state accurately representing the originally imaged state of the measurement target object before the gain control is performed thereon.

The image generation means 40 is a means for generating the spectroscopic images SP1 to SP 3 from the color image P after the controlled gains thereof are initialized by the gain initialization means 30. Note that the operation thereof is detailed in Japanese Unexamined Patent Publication No. 2003-94336. The image generation means 40 includes: a coefficient database 41 having stored therein the unique information F1 and a transformation coefficient C associated with each other; a coefficient obtaining means 42 for obtaining a transformation coefficient C to be used for the image transformation from the coefficient database 41 using the unique information F1 obtained by the image obtaining means 20; and a transformation performing means 43 for transforming the color image P to the plurality of spectroscopic images SP1 to SP3 using the obtained transformation coefficient C.

The transformation coefficients stored in the coefficient database 41 are, for example, of a $3 \times 3$ transformation matrix. The transformation performing means 43 generates the spectroscopic images SP1, SP2, and SP3 at predetermined wavelengths $\lambda 1$, $\lambda 2$, and $\lambda 3$ respectively by multiplying the transformation coefficient C to the RGB signals of the color image P as shown in the following formula.

$$\begin{pmatrix} SP_1 \\ SP_2 \\ SP_3 \end{pmatrix} = C * P = \begin{pmatrix} a_1 & a_1 & a_1 \\ b_1 & b_2 & b_3 \\ c_1 & c_2 & c_3 \end{pmatrix} \begin{pmatrix} R \\ B \\ G \end{pmatrix} \qquad (1)$$

The coefficient obtaining means 42 obtains the transformation coefficient C from the coefficient database 41 based on the spectroscopic properties and the like obtained as the unique information F1. Here, the description has been made of a case in which the coefficient obtaining means 42 obtains the transformation coefficient C to be used for the image transformation from the coefficient database 41 in advance, but it may have a function to generate the transformation coefficient C based on the unique information F1. Thus, when generating estimated spectroscopic images of desired spectroscopic wavelengths after images are obtained by endoscope systems, good and high-fidelity estimated spectroscopic images SP1 to SP3 may be generated from color images P obtained by a plurality of different endoscope systems having different spectroscopic properties by changing the transformation coefficients C based on the unique information F1.

Further, a configuration may be adopted in which the transformation coefficient C is stored in the coefficient database 41 associated with the imaged region information F2, and the coefficient obtaining means 42 obtains the transformation coefficient C from the coefficient database 41 based on the imaged region information F2 obtained by the image obtaining means 20. For example, if the imaged region information F2 stored in the coefficient database 41 is "blood vessel" and associated therewith is a transformation coefficient C by which estimated spectroscopic images SP1, SP2, and SP3 at spectroscopic wavelengths 470, 500, and 670nm are obtained, and the imaged region information F2 obtained by the image obtaining means 20 is blood vessel, the transformation performing means 43 generates the estimated spectroscopic images SP1, SP2, and SP3 at spectroscopic wavelengths 470, 500, and 670nm using the transformation coefficient C. In this way, estimated spectroscopic images at spectroscopic wavelengths appropriate for observing the imaged region may be generated automatically, so that the convenience thereof is improved.

The image output means 50 generates a processed image CP by allocating R, G, and B signals to the estimated spectroscopic images SP1, SP2, and SP3 respectively generated by the image generation means 40, and outputs the processed image CP to the display section, printer, or storage device such as a hard disk or the like. For example, with the pixel data of the spectroscopic image SP1 as the pixel data of R signal, the pixel data of the spectroscopic image SP2 as the pixel data of G signal, and the pixel data of the spectroscopic image SP3 as the pixel data of B signal, a processed image CP of RGB color image is generated. Here, the image output means 50 may output the color image P or the gain initialized color image P together with the processed image CP.

The allocation of the estimated spectroscopic images SP1, SP2, and SP3 to RGB signals may be specified by user input. Further, when generating the processed image CP, any known image processing technique may be performed, such as weighted addition in which an output gain factor is multiplied to each of the allocated RGB signals. Further, the image output means 50 may be a means capable of controlling the output gain factor through user input. Still further, the image output means 50 may be a means capable of transforming the data format of the processed image CP from RGB to DIB signals, thereby generating a 24-bit DIB image and displaying it on the display section.

As described above, the estimated spectroscopic images SP1, SP2, and SP3 are generated using the color image P accurately restored to the originally imaged state by initializing the controlled gains, so that the generation accuracy of the estimated spectroscopic images SP1, SP2, and SP3 may be improved. That is, the image database 10 includes a plurality of color images P gain controlled using different gain factors. Therefore, for example, when estimated spectroscopic images SP at a predetermined wavelength are generated from two different color images of the same measurement target object having different gain factors using the same transformation coefficient, the spectroscopic wavelengths of the generated estimated spectroscopic images SP differ with each other due to the difference in the gain factors. On the other hand, by generating the estimated spectroscopic images SP from gain initialized color images P, the difference in the spectroscopic wavelengths due to the difference in the controlled gains may be prevented and the generation accuracy of the estimated spectroscopic images may be improved.

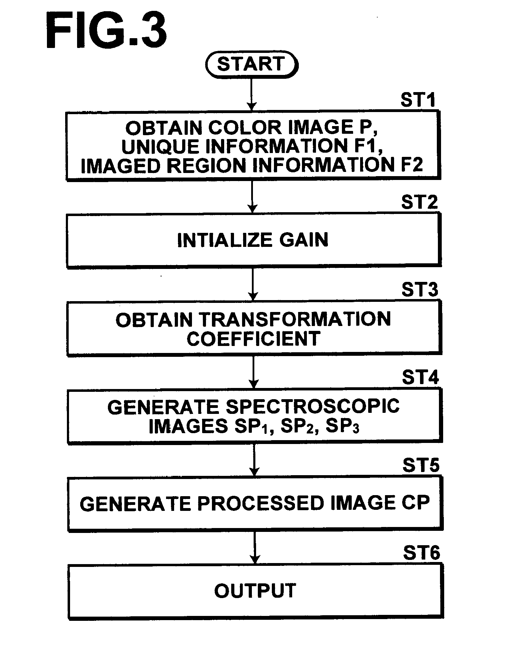

Figure 3 is a flowchart illustrating an example operation of the image processing apparatus of the present invention. The example operation of the image processing apparatus 1 will now be described with reference to Figures 1 to 3. First, in the image generation means 40, a color image P for generating estimated spectroscopic images is selected from the database 10 (step ST1) . Here, the unique information F1 and the imaged region information F2 associated with the color image P are also obtained. Then, the controlled gains of the color image P are initialized by the gain initialization means 30 (step ST2). In the coefficient means 42, a transformation coefficient C for performing a matrix transformation is selected from the coefficient database 41 or calculated based on the unique information F1 and the imaged region information F2 (step ST3). Thereafter, in the transformation performing means 43, the color image P is matrix-transformed using the transformation coefficient C, and a plurality of estimated spectroscopic images SP1 to SP3 is generated (step ST4).

Then, in the image output means 50, a processed image CP represented by RGB signals is generated by allocating the generated estimated spectroscopic images SP1 to SP3 to primary color signals (step ST5). Here, each of the RGB signals may be multiplied by an output gain factor. Then, the generated processed image CP is displayed on a display by the image output means 50 (step ST6).

According to the embodiment described above, even when estimated spectroscopic images SP1 to SP3 are generated using a color image P obtained by an endoscope system and gain controlled before being stored in order to improve the visibility of the color image p or the like, the estimated spectroscopic images SP1 to SP3 are generated after the color image P is accurately restored to the originally recorded state by initializing the controlled gains, so that the generation accuracy of the estimated spectroscopic images SP1 to SP3 may be improved. Further, when a plurality of color images P, gain controlled to different levels with each other, is stored in the image database 10, estimated spectroscopic images SP1 to SP3 are generated after initializing the controlled gains, so that the variation in the spectroscopic wavelengths of the estimated spectroscopic images SP1 to SP3 arising from the variation in the gain factors may be prevented.

It would be appreciated that the present invention is not limited to the foregoing embodiment. For example, in the embodiment, the description has been made of a case in which three estimated spectroscopic images SP1 to SP3 are generated, but the number of the estimated spectroscopic images may be one or more than one.

**Claims**

1. An image processing method, comprising the steps of:

   obtaining a color image (P) obtained by an endoscope system and gain controlled in each of the primary color signals, and unique information (F1) of the endoscope system that obtained the color image (P) from an image database (10) having stored therein the color image (P) and the unique information (F1) associated with each other;
   initializing the controlled gains of the color image (P) based on the obtained unique information (F1); and
   generating estimated spectroscopic images (SP1 to SP3) from the gain initialized color image (P).

2. An image processing apparatus, comprising:

   an image database (10) having stored therein a color image (P) obtained by an endoscope system and gain controlled in each of the primary color signals, and unique information (F1) of the endoscope system that obtained the color image(P) associated with each other;
   an image obtaining means (20) for obtaining the color image (P) and the unique information (F1) from the image database (10);
   a gain initialization means (30) for initializing the controlled gains of the color image (P) based on the unique information (F1) obtained by the image obtaining means (20); and
   an image generation means (40) for generating estimated spectroscopic images (SP1 to SP3) from the gain initialized color image (P).

3. The image processing apparatus according to claim 2, **characterized in that** the image generation means (40) comprises:

   a coefficient database (41) having stored therein a transformation coefficient (C), which is used when the estimated spectroscopic images (SP1 to SP3) are generated from the color image (P), and the unique information (F1) associated with each other;
a coefficient obtaining means (42) for obtaining the transformation coefficient (C) from the coefficient database (41) using the unique information (F1) obtained by the image obtaining means (20); and
a transformation performing means (43) for transforming the color image (P) such that estimated spectroscopic images (SP1 to SP2) at predetermined spectroscopic wavelengths are generated using the transformation coefficient obtained by the coefficient obtaining means (42).

4. The image processing apparatus according to claim 2, **characterized in that**:

the image database (10) is a database having stored therein imaged region information (F2) of the color image (P) associated therewith together with the unique information (F1);
the image obtaining means (20) is a means for obtaining the unique information (F1) and the imaged region information (F2) together with the color image (P); and
the image generation means (40) is a means for generating the estimated spectroscopic images (SP1 to SP2) based on the imaged region information (F2)

5. The image processing apparatus according to claim 3, **characterized in that**:

the coefficient database (41) is a database having stored therein the imaged region information (F2) associated with the transformation coefficient (C) together with the unique information (F1) ; and
the coefficient obtaining means (42) is a means for obtaining the transformation coefficient (C) from the coefficient database (41) using the unique information (F1) and the imaged region information (F2).

6. An image processing program for causing a computer to perform a process comprising the steps of:

obtaining a color image (P) obtained by an endoscope system and gain controlled in each of the primary color signals, and unique information (F1) of the endoscope system that obtained the color image (P) from an image database (10) having stored therein the color image (P) and the unique information (F1) associated with each other;
initializing the controlled gains of the color image (P) based on the obtained unique information (F1); and
generating estimated spectroscopic images (SP1 to SP3) from the gain initialized color image (P).

FIG.1

FIG.2

# FIG.3

START

ST1

OBTAIN COLOR IMAGE P,
UNIQUE INFORMATION F1,
IMAGED REGION INFORMATION F2

ST2

INTIALIZE GAIN

ST3

OBTAIN TRANSFORMATION
COEFFICIENT

ST4

GENERATE SPECTROSCOPIC
IMAGES SP$_1$, SP$_2$, SP$_3$

ST5

GENERATE PROCESSED IMAGE CP

ST6

OUTPUT

European Patent
Office

## EUROPEAN SEARCH REPORT

Application Number

EP 07 00 6409

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 885 634 A (YABE HISAO [JP]) 5 December 1989 (1989-12-05) * abstract * * column 1, lines 11-16 * * column 3, lines 43-54 * * column 6, line 65 - column 7, line 5 * * column 9, lines 21-27 * * column 10, line 47 - column 11, line 16 * * column 13, line 15 - column 14, line 20 * ----- | 1-6 | INV. G06T5/00 H04N1/60 |
| X | HANEISHI H ET AL: "Color correction for colorimetric color reproduction in an electronic endoscope" OPTICS COMMUNICATIONS, NORTH-HOLLAND PUBLISHING CO. AMSTERDAM, NL, vol. 114, no. 1, 15 January 1995 (1995-01-15), pages 57-63, XP004014206 ISSN: 0030-4018 * abstract * * sections "1. Introduction", "2. Theory" * ----- | 1-6 | |
| A | SAMBONGI M ET AL: "Analysis of spectral reflectance of mucous membrane for endoscopic diagnosis" ENGINEERING IN MEDICINE AND BIOLOGY SOCIETY, 2000. PROCEEDINGS OF THE 22ND ANNUAL INTERNATIONAL CONFERENCE OF THE IEEE 23-28 JULY 2000, PISCATAWAY, NJ, USA,IEEE, vol. 2, 23 July 2000 (2000-07-23), pages 1026-1029, XP010529092 ISBN: 0-7803-6465-1 * abstract * * sections "I. Introduction", "II. Database", "III. Methods" * ----- | 1-6 | TECHNICAL FIELDS SEARCHED (IPC)  G06T H04N |

The present search report has been drawn up for all claims

| Place of search | Date of completion of the search | Examiner |
|---|---|---|
| Munich | 25 May 2007 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 6409

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2007

| Patent document cited in search report | | Publication date | Patent family member(s) | | Publication date |
|---|---|---|---|---|---|
| US 4885634 | A | 05-12-1989 | JP | 1113022 A | 01-05-1989 |
| | | | JP | 7096005 B | 18-10-1995 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003094336 A

- JP 2003102676 A